(19) Europäisches Patentamt
European Patent Office
Office européen des brevets

(11) Veröffentlichungsnummer: **0 345 762**
**A2**

# (12) EUROPÄISCHE PATENTANMELDUNG

(21) Anmeldenummer: **89110304.6**

(22) Anmeldetag: **07.06.89**

(51) Int. Cl.[4]: **C08G 63/52 , C08G 63/68 , C08G 69/44**

(30) Priorität: **07.06.88 DD 316482**
**07.06.88 DD 317043**

(43) Veröffentlichungstag der Anmeldung:
**13.12.89 Patentblatt 89/50**

(84) Benannte Vertragsstaaten:
**CH DE FR GB IT LI NL**

(71) Anmelder: **Akademie der Wissenschaften der DDR**
**Otto-Nuschke-Strasse 22/23**
**DDR-1086 Berlin(DD)**

(72) Erfinder: **Rätzsch, Manfred, Prof. Dr. rer. nat. Dipl.-Chem.**
**Patrice-Lumumba-Strasse 4**
**DDR-8020 Dresden(DD)**
Erfinder: **Grasshoff, Karin, Dipl.-Chem.**
**Lommatzscher Strasse 111**
**DDR-8030 Dresden(DD)**

(74) Vertreter: **Patentanwälte Beetz sen. - Beetz jun. Timpe - Siegfried - Schmitt-Fumian-Mayr**
**Steinsdorfstrasse 10**
**D-8000 München 22(DE)**

## (54) Thermotrophe vernetzbare Polymere mit mesogenen Einheiten und flexiblen Spacern in der Polymerhauptkette und Verfahren zu ihrer Herstellung.

(57) Die Erfindung betrifft reguläre, lineare, thermotrope, vernetzbare Polymere, insbesondere Polyester und Polyesteramide, mit mesogenen Einheiten und flexiblen Spacern in der Polymerhauptkette, welche durch Hochtemperatur-Lösungskondensation erhältlich sind. Dabei wird ein komplexes Dicarbonsäuredichlorid mit einer als Oligomer vorliegenden ungesättigten Dihydroxykomponente polykondensiert. Es werden Verbindungen erhalten, die nach ihrer Verarbeitung durch Vernetzung unschmelzbar werden und dabei ihre vorteilhaften flüssigkristallinen Eigenschaften behalten. Diese Verbindungen sind Spezialwerkstoffe mit hoher Festigkeit und Wärmebeständigkeit bei einfacher Verarbeitbarkeit.

EP 0 345 762 A2

# Thermotrope vernetzbare Polymere mit mesogenen Einheiten und flexiblen Spacern in der Polymerhauptkette und Verfahren zu ihrer Herstellung

Die Erfindung betrifft reguläre, lineare, thermotrope, vernetzbare Polymere mit mesogenen Einheiten und flexiblen Spacern in der Polymerhauptkette, insbesondere Polyester und Polyesteramide und ein Verfahren zu ihrer Herstellung, besonders durch Hochtemperaturlösungspolykondensation. Die Polymeren gemäß der Erfindung sind überall dort vorteilhaft einsetzbar, wo Spezialwerkstoffe mit hoher Festigkeit und Wärmebeständigkeit bei einfacher Verarbeitbarkeit benötigt werden.

Es ist bereits eine Vielzahl von linearen, thermotropen Polymeren bekannt. Es handelt sich dabei auch um Polyester oder Polyesteramide, die eine anisotrope Schmelze bilden und durch Verarbeitung aus dieser Schmelze zu Erzeugnissen mit besonders günstigen mechanischen Eigenschaften, wie hohen Festigkeiten und hohem Modul, führen (EP A 63 880, 67 032, 81 900, 7715; US-A-4 393 194, 4 184 996, 4 473 682, 4 351 917, 4 272 625). Formkörper, Folien und Fäden aus thermotropen Polymeren sind naturgemäß nur bis zu Temperaturen unterhalb ihres Polymerschmelzpunktes beständig. Deshalb wurde versucht, flüssigkristalline Polyester nach der Verarbeitung unter Beibehaltung ihrer vorteilhaften Eigenschaften in ihrer Gestalt zu fixieren, d.h. entweder den Schmelzpunkt drastisch zu erhöhen oder die Polymeren unschmelzbar zu machen. Ein bekanntes Verfahen ist die nachträgliche Temperung des verarbeiteten Polymers bei Temperaturen knapp unter dem Schmelzpunkt für mehrere Stunden, was zu einer Molmassenerhöhung und damit auch zu höheren Schmelzpunkten führt (US-A-4 066 620, 4 473 682, 4 499 259, 4 500 699). Eine andere Möglichkeit ist die Fixierung der Polymeren durch Vernetzung. Beschrieben wurden vollaromatische, thermotrope Polyester, die nach der Formgebung durch Erhitzen in Sauerstoffatmosphäre oxidativ vernetzt wurden (US-A-4 224 433). Von Nachteil sind dabei die gleichzeitig ablaufenden Abbaureaktionen am Polymer. In US-A-4 350 809 sind Polymere einschließlich Polyester, beschrieben, die anisotrope Schmelzen bilden und in der Polymerkette sogenannte "selbstvernetzende" reaktive Gruppen besitzen. Das sind Monomerbausteine mit meist drei oder mehr reaktiven Hydroxy-, Carboxy-, Amino-, Isocyanat- oder Carbonimidgruppen oder Kombinationen davon. In US-A-4 417 043 sind Polymere angegeben, die durch Additionspolymerisation monoethylenisch ungesättigter Monomerer hergestellt werden und als Vernetzer Verbindungen mit zwei ethylenisch ungesättigten Gruppen, wie p-Divinylbenzol, Allylacrylat, Maleinsäure- oder Fumarsäurediallylester u.ä., enthalten. Dabei kann nur ein sehr kleiner Anteil an Vernetzungsagens eingesetzt werden (0,01 bis 5 %), da die Polymeren bereits bei der Herstellung vernetzen und höhere Anteile zu einem nicht weiter verarbeitbaren Feststoff führen.

Beschrieben wurden weiterhin flüssigkristalline, vollaromatische Polymere mit Stilben oder Tolaneinheiten in der Polymerhauptkette (US-A-4 654 412), die durch Elektronenacceptormonomere, wie Maleinsäure, Maleinsäureanhydrid, Fumarsäure oder Itaconsäure, vernetzt werden können. Nachteilig sind dabei die hohen Schmelz- und Verarbeitungstemperaturen sowie die hohe Schmelzviskosität bei vollaromatischen, flüssigkristallinen Polyestern. Von weiterem Nachteil sind die langen Vernetzungszeiten bei hohen Temperaturen (20 Stunden) und die anschließend notwendige Temperung über mehrere Stunden.

In US-A-4 398 019 sind flüssigkristalline Polyester und Polyesteramide mit Fumarsäureeinheiten in der Polymerhauptkette beschrieben. Weitere Bestandteile sind aliphatische Dicarbonsäuren, aromatische Hydroxycarbonsäuren, Diphenole und p-Aminophenole. Es handelt sich bei diesen Polyestern um statistisch aufgebaute Polymere mit unterschiedlichen Sequenzen. Diese Polymeren sind für Vernetzungsreaktionen unter Erhaltung der flüssigkristallinen (LC-) Eigenschaften nicht geeignet, da die Steifigkeit der Moleküle bei Aufspaltung der C = C - Doppelbindung verlorengeht.

Verfahren zur Herstellung regulär aufgebauter LC-Polymerer mit starren und flexiblen Einheiten in der Polymerhauptkette, die eine reaktionsfähige, ungesättigte Gruppe in Form von Fumarsäure in mesogenen Gruppen enthalten, sind aus Makromol. Chemie, Rapid Communication Vol. 6 (1985), Heft 9, S. 601, bekannt. Der Nachteil dieser Polyester besteht darin, daß eine Umsetzung der C = C - Doppelbindung zur Einfachbindung, wie dies bei Additionen oder Vernetzungen der Fall wäre, durch Destabilisierung der mesogenen Gruppe zum Verlust der flüssigkristallinen Eigenschaften führt (Vysokomol. Soedin, B 24 (1987) 7, S. 504.

Ebenfalls bekannt sind regulär aufgebaute flüssigkristalline Polyester mit langen, gesättigten, einheitlichen Spacern, wie 1,10 Dioxydecan oder Oligooxypropylen, die zwar einen für die Verarbeitung sehr günstigen, niedrigen Schmelzpunkt aufweisen, jedoch wegen ihres niedrigen Schmelzpunktes nur eine eingeschränkte Anwendungsbreite besitzen (Vysokomol. Soedin. A 26 (1984) 12, S. 2570).

Im bekannten Stand der Technik sind keine Mittel und Methoden angeführt, wie ein regulär aufgebauter, ungesättigter, flüssigkristalliner Polyester oder ein entsprechendes Polyesteramid mit genügend niedrigem Schmelzpunkt hergestellt werden können, die unter Erhaltung der flüssigkristallinen Eigenschaften vernetz-

bar sind.

Der Erfindung liegt die Aufgabe zugrunde, reguläre, lineare, thermotrope, vernetzbare Verbindungen mit hinreichend niedrigem Schmelzpunkt, die nach der Vernetzung unschmelzbar sind und dabei ihre vorteilhaften flüssigkristallinen Eigenschaften beibehalten, sowie ein Verfahren zu ihrer Herstellung aus geeigneten Ausgangsstoffen anzugeben.

Die Aufgabe wird anspruchsgemäß gelöst; die abhängigen Ansprüche betreffen vorteilhafte Ausführungsformen.

Die erfindungsgemäßen regelmäßig aufgebauten, linearen, thermotropen und vernetzbaren Polymeren mit mesogenen Einheiten und flexiblen Spacern in der Hauptkette sind gekennzeichnet durch die allgemeine Strukturformel I,

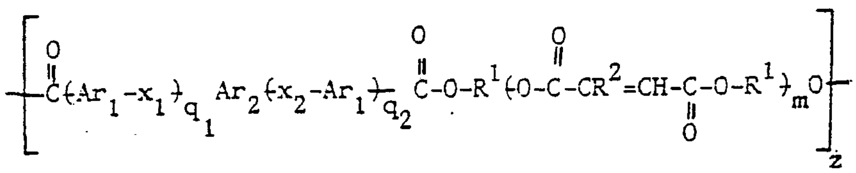 (I),

worin bedeuten:

- $Ar_1$ 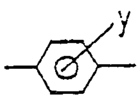, 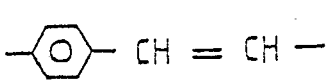 oder 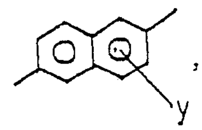,

und

$Ar_2$ 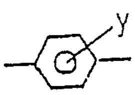, 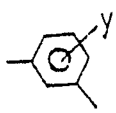, 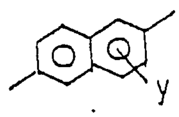,

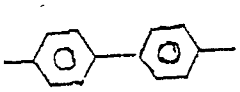, 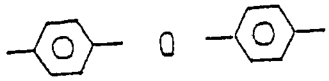, 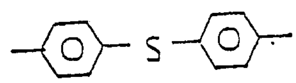;

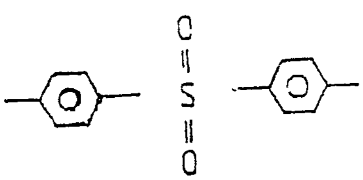 oder 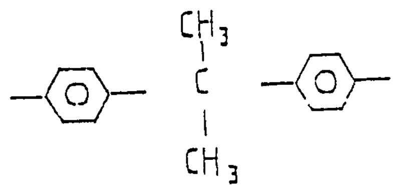,

wobei y H, F, Cl, CN, Phenyl oder $C_nH_{2n+1}$ oder $OC_nH_{2n+1}$ mit n = 1, 2, 3 oder 4 bedeutet,

- $x_1$ OCO und $x_2$ COO
oder
$x_1$ COO und $x_2$ OCO
oder
$x_1$ NHCO und $x_2$ CONH
oder
$x_1$ CONH und $x_2$ NHCO,

- $R^1$ eine gesättigte lineare oder verzweigte aliphatische Gruppe mit 2 bis 12 C-Atomen oder eine oxyaliphatische Gruppe mit 4 bis 10 C-Atomen,

- $R^2$ H oder $CH_3$,

- $q_1$ und $q_2$ zugleich oder unabhängig 1, 2, 3, 4 oder 5,

- m 1, 2, 3 oder 4

und

- z den Polykondensationsgrad, insbesondere eine Zahl von 5 bis 15.

Die erfindungsgemäßen Polymeren weisen entsprechend Grundeinheiten der Formel

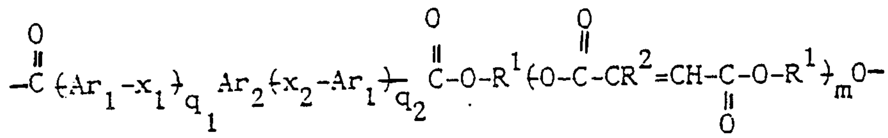

mit $Ar_1$, $Ar_2$, $x_1$, $x_2$, $R^1$, $R^2$, $q_1$, $q_2$ und m wie oben auf, deren mittlere Anzahl pro Makromolekül, d.h. der Polykondensationsgrad z, von den angewandten Mengenverhältnissen der eingesetzten Reaktanten und insbesondere den Polykondensationsbedingungen abhängt; er liegt vorteilhaft im Bereich von 5 bis 15.

R' bedeutet insbesondere

$(CH_2\text{-}CHR^3\text{-}O)_s$ mit $R^3$ = H oder $CH_3$ und s = 2, 3 oder 4,

$(CH_2\text{-}CHR^3)_{s'}$ mit $R^3$ = H oder $CH_3$ und s' = 0, 1, 2, 3 oder 4

oder

$(CH_2)_{s''}$ mit s'' = eine ganze Zahl von 1 bis 8.

Die erfindungsgemäßen Verbindungen sind vorzugsweise reguläre, lineare, thermotrope, vernetzbare Polyester mit mesogenen Einheiten und flexiblen Spacern in der Polymerhauptkette wie oben definiert, in deren Struktureinheiten entsprechend $x_1$ OCO und $x_2$ COO oder $x_1$ COO und $x_2$ = OCO bedeuten. Gemäß bevorzugten Ausführungsformen bedeuten q = 1, m = 1 oder 2,

$Ar_1$ = 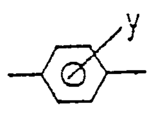 oder 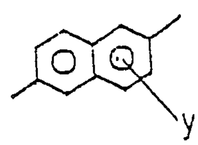

mit y = H,

$Ar_2$ = 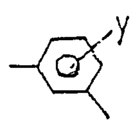 oder 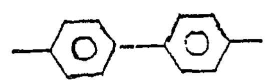

und insbesondere

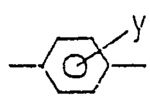 oder 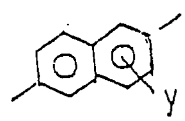

mit y = H, Cl, $CH_3$, $OCH_3$.

Weiterhin können $R^1$ günstigerweise eine Kette von 2 bis 8 Methylengruppen, beispielsweise $(CH_2\text{-}CHR^3)_s$ mit $R^3$ = H oder $CH_3$ und s = 2 bis 4, und $R^2$ Wasserstoff bedeuten.

Weiteren vorteilhaften Ausgestaltungen entsprechen folgende Kombinationen:

- $q_1$, $q_2$ = 1, m = 1, $R^1$ = $-(CH_2)_{s''}-$ mit s" = 4 bis 8, insbesondere für $R^2$ = H;
- $Ar_1$ = $Ar_2$ = 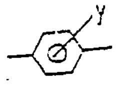 mit y = H, $x_1$ = COO, $x_2$ = OCO;
- $Ar_1$ = $Ar_2$ = 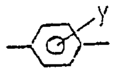 mit y = H, $x_1$ = OCO; $x_2$ = COO;
- $Ar_1$ = 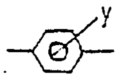 und $Ar_2$ = 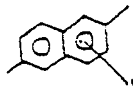 mit y = H, $x_1$ = OCO, $x_2$ = COO;
- $Ar_1$ = 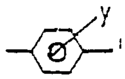, mit y = H und $Ar_2$ = 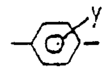 mit Y = Cl, $x_1$ = COO, $x_2$ = OCO.

Die Polyester und Polyesteramide können durch Zusatz von Vernetzern oder durch Energiezufuhr vernetzt werden.

Eine weitere Ausgestaltung der Erfindung beinhaltet entsprechend reguläre, lineare, thermotrope, vernetzbare Polyesteramide mit mesogenen Einheiten und flexiblen Spacern der allgemeinen Strukturformel I,

$$\left[\overset{\overset{O}{\|}}{C}(Ar_1-x_1)_{q_1}Ar_2(x_2-Ar_1)_{q_2}\overset{\overset{O}{\|}}{C}-O-R^1(O-\overset{\overset{O}{\|}}{C}-CR^2=CH-\underset{\underset{O}{\|}}{C}-O-R^1)_m O\right]_z \quad (I),$$

worin bedeuten:

- $Ar_1$ 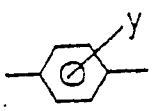 oder 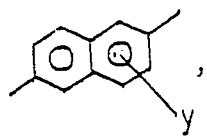,

- $x_1$ NHCO und $x_2$ CONH
oder
$X_1$ CONH und $x_2$ NHCO,
- $q_1$ und $q_2$ zugleich oder unabhängig 1 oder 2
und
- $Ar_2$, $R^1$, $R^2$, m und z dasselbe wie oben zu Strukturformel I definiert.

Bevorzugte Ausführungsformen der erfindungsgemäßen Polyesteramide entsprechen folgenden Kombinationen:

$q_1$, $q_2$ = 1, m = 1 oder 2;

$Ar_1$ = 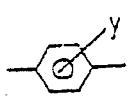 oder 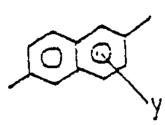 mit y = H;

$Ar_2$ = 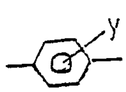, 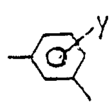, 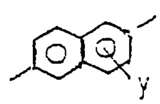 oder 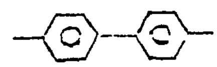

mit y = H, Cl, $CH_3$, $OCH_3$.

Weiterhin können $R^1$ eine Kette von 2 bis 8 Methylengruppen oder $\{CH_2-CHR^3O\}_s$ vorzugsweise mit $R^3$ = H oder $CH_3$ und s = 2 bis 4 und $R^2$ Wasserstoff bedeuten.

Weiteren vorteilhaften Ausgestaltungen entsprechen folgende Kombinationen:

- $Ar_1 = Ar_2 =$ 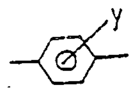 mit y = H  $x_1$ = NHCO und $x_2$ = CONH;

- $Ar_1 = Ar_2 =$ 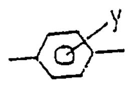 mit y = H  $x_1$ = CONH und $x_2$ = NHCO;

- $Ar_1 =$ 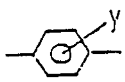 , $Ar_2 =$ 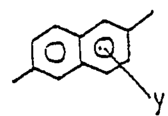

mit y = H, $x_1$ = NHCO und $x_2$ = CONH;

- $Ar_1 =$ 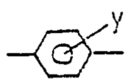 mit y = H und $Ar_2 =$ 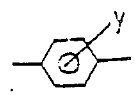 mit y = Cl, $x_1$ = NHCO, $x_2$ = CONH.

Die Polyesteramide können ebenfalls durch Zusatz von Vernetzungsmitteln oder durch Energiezufuhr vernetzt werden.

Das erfindungsgemäße Verfahren zur Herstellung regelmäßig aufgebauter, linearer thermotroper und vernetzbarer Polymerer, insbesondere von Polyestern und Polyesteramiden, die mesogene Einheiten sowie flexible Spacer in der Polymerhauptkette aufweisen, beruht auf dem an sich bekannten Verfahren der Hochtemperatur-Lösungspolykondensation eines Dicarbonsäuredichlorids mit einer Diolkomponente; es ist gekennzeichnet durch Polykondensation eines komplexen Dicarbonsäuredichlorids der allgemeinen Formel II,

$$Cl-\overset{\overset{O}{\|}}{C}\{Ar_1-x_1\}_{q1}Ar_2\{x_2-Ar_1\}_{q2}\overset{\overset{O}{\|}}{C}-Cl \quad (II),$$

worin bedeuten:

- Ar1 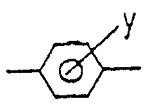, 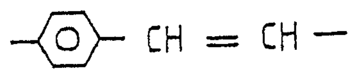 oder 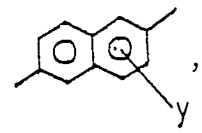,

- Ar2 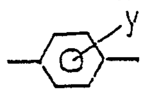, 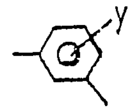, 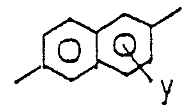,

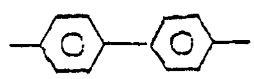, 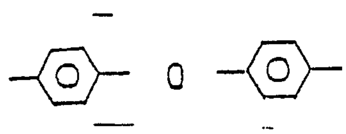, 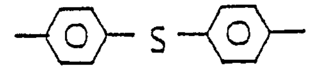,

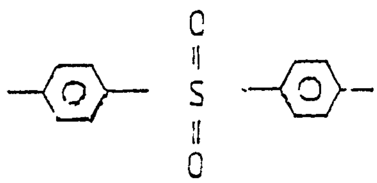 oder 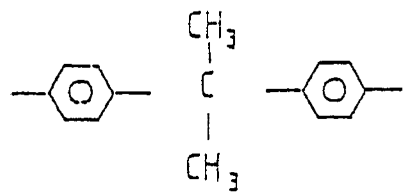,

wobei y H, F, Cl, CN, Phenyl oder $C_nH_{2n+1}$ oder $OC_nH_{2n+1}$ mit n = 1, 2, 3 oder 4 bedeutet,
- $x_1$ OCO und $x_2$ COO
oder
$x_1$ COO und $x_2$ OCO
oder
$x_1$ NHCO und $x_2$ CONH
oder
$x_1$ CONH und $x_2$ NHCO,
und
- $q_1$ und $q_2$ zugleich oder unabhängig 1, 2, 3, 4 oder 5,

mit einem oligomeren ungesättigten Diol der allgemeinen Formel III,

$$HO\text{-}R^1\{O\text{-}\overset{\overset{O}{\|}}{C}\text{-}CR^2=CH\text{-}\underset{\underset{O}{\|}}{C}\text{-}O\text{-}R^1\}_mOH \qquad (III),$$

worin bedeuten:
- $R^1$ eine gesättigte lineare oder verzweigte aliphatische Gruppe mit 2 bis 12 C-Atomen oder eine oxyaliphatische Gruppe mit 4 bis 10 C-Atomen
- $R^2$ H oder $CH_3$
und
- m 1, 2, 3 oder 4.

Die Diolkomponente enthält eine oder mehrere ungesättigte Gruppen und liegt in Form von Oligomeren vor.

Dem Einsatz des Oligomers kommt insofern besondere Bedeutung zu, als die Herstellung der regulären, thermotropen, vernetzbaren Verbindungen, insbesondere der Polyester oder Polyesteramide, aus den einzelnen Komponenten, d.h. aromatischen Hydroxycarbonsäuren, aromatischen Dicarbonsäuren, aromatischen Dihydroxyverbindungen, Dicarbonsäuren, aliphatischen Diolen bzw. deren reaktiven Derivaten, nach den an sich bekannten Methoden der Polykondensation aus den einzelnen Monomeren nicht möglich ist.

Das Oligomer wird nach einer für die Herstellung von Estern üblichen Kondensationsreaktion aus einer ungesättigten Dicarbonsäure und dem 2 bis 10fachen Überschuß einer aliphatischen Dihydroxyverbindung hergestellt. Es kann dabei in der Schmelze, in Löşung oder azeotrop gear beitet werden.

Die Verwendung einer ungesättigten Dihydroxyverbindung der Formel III ermöglicht die bezüglich ihrer Anzahl und ihrer Position gezielte Einführung von reaktionsfähigen Doppelbindungen in den Polyester bzw. das Polyesteramid und ermöglicht eine nachträgliche Vernetzung unter Beibehaltung der flüssigkristallinen

Eigenschaften. Für die Polykondensation wird das monoethylenisch oder mehrfach ungesättigte Diol der Formel III mit dem komplexen Dicarbonsäurechlorid der Formel II in einem Molverhältnis von 1:5 bis 5:1 eingesetzt. Bevorzugt kommen Molverhältnisse von 1:2 bis 2:1 zur Anwendung. Am günstigsten wird äquimolar gearbeitet.

Bei bevorzugten Ausführungsformen der Erfindung werden Ausgangsverbindungen eingesetzt, bei denen folgende Kombinationen vorliegen:

$q_1$, $q_2$ = 1

$Ar_1$ = 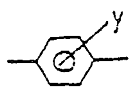 oder 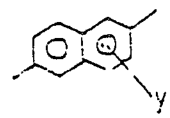 mit y = H:

$Ar_2$ = 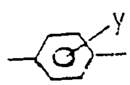 , 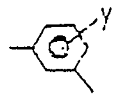 , 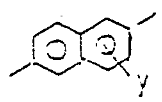 oder 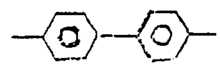

mit y = H, Cl, $CH_3$, $OCH_3$,

$R^1$ eine Kette von 2 bis 8 Methylengruppen,

$R^2$ Wasserstoff oder $R^1$ $\{CH_2\text{-}CHR^3\text{-}O\}_s$ mit s = 2 bis 4,

$R^3$ H oder $CH_3$ und $R^2$ Wasserstoff, m = 1 und/oder 2.

Vorteilhaft ist es, als komplexes Dicarbonsäuredichlorid Terephthaloyl-bis(4-oxybenzoylchlorid) oder Terephthaloyl-bis(4-aminobenzoylchlorid) und als oligomeres Diol ein Dihydroxydialkylfumarat mit 4 bis 8 Kohlenstoffatomen in der Alkylkette zu verwenden und in äquimolarem Verhältnis bei 170 bis 220 °C in einem inerten Lösungsmittel unter Inertgas 1 bis 2 Stunden zu polykondensieren und die Verbindung, insbesondere den Polyester oder das Polyesteramid, mit 1 bis 5 mol Styrol pro Mol Doppelbindungen im Polymer zu vernetzen. Als komplexe Dicarbonsäuredichloride können ferner vorteilhaft auch N,N′-1,4-Phenylen-bis(terephthalamidocarbonsäurechlorid), 2,6-Naphthyl-bis(4-aminobenzoylchlorid), o,o′-1,4-Phenylen-bis(terephthaloylcarbonsäurechlorid), 2,6-Naphthaloyl-bis(4-oxybenzoylchlorid). oder 1,4-Dioxycarbonyl-2-chlorphenyl-bis(4-benzoylchlorid) eingesetzt werden. Als Lösungsmittel für die Polykondensation dienen hochsiedende, inerte Stoffe oder Stoffgemische, wie α- oder ß-Chlornaphthalin, ß-Methylnaphthalin, Diphenylether oder Aromatengemische. Die Veresterung wird unter Inertgas bei Normaldruck bei Temperaturen von 140 bis 240 °C durchgeführt. Die Reaktionsdauer beträgt 0,5 bis 4 Stunden. Intensives Rühren ist möglich. Die Verbindungen, insbesondere die Polyester oder Polyesteramide, werden durch Fällung in einem geeigneten Lösungsmittel isoliert.

Diese so hergestellten Polymeren und insbesondere Polyester und Polyesteramide enthalten pro Struktureinheit (vgl. Formel I) eine oder mehrere monoethylenisch ungesättigte Komponenten, wie Fumarsäure oder substituierte Fumarsäure. Weitere Bestandteile der Polymeren sind gesättigte aliphatische oder oxyaliphatische Diole, wie insbesondere Ethylenglycol, Propylenglycol, 1,4-Butandiol, 1,3-Butandiol, 1,5-Pentandiol, 1,6-Hexandiol, 1,7-Heptan diol, 1,8-Octandiol, 1,9-Nonandiol, 1,10-Decandiol, 1,11-Undecandiol, 1,12-Dodecandiol, Diethylenglycol, Triethylenglycol, Dipropylenglycol und Tripropylenglycol, sowie ein- oder mehrkernige aromatische Hydroxycarbonsäuren, wie p-Hydroxybenzoesäure, 6-Hydroxynaphthalin-2-carbonsäure, p-Hydroxyzimtsäure sowie deren ringsubstituierte Derivate. Die Substituenten können Alkylgruppen mit 1 bis 4 Kohlenstoffatomen, Alkoxygruppen mit 1 bis 4 Kohlenstoffatomen, Phenylgruppen, Halogenatome oder Cyanogruppen sein. Beispiele dazu sind 6-Hydroxy-5-chlor-2-naphthalincarbonsäure, 6-Hydroxy-5-methyl-2-naphthalincarbonsäure, 6-Hydroxy-5-methoxy-2-naphthalincarbonsäure, 6-Hydroxy-7-chlor-2-naphthalincarbonsäure, 6-Hydroxy-4,7-dichlor-2-naphthalincarbonsäure usw. Bevorzugte Hydroxycarbonsäuren sind p-Hydroxybenzoesäure und 6-Hydroxy-2-naphthalincarbonsäure. Ein weiterer Bestandteil der Polymeren sind ein-oder mehrkernige aromatische Dicarbonsäuren. Günstige Beispiele sind folgende Einheiten:

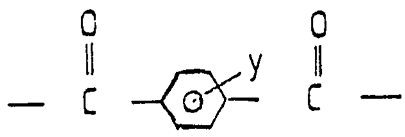,
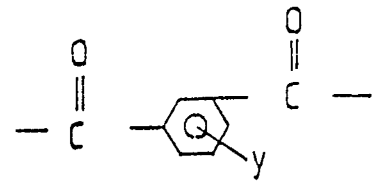,

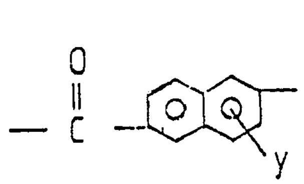 oder 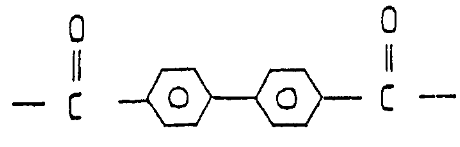

mit y wie oben definiert,

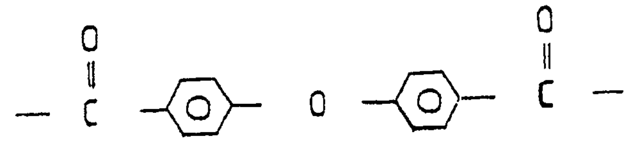

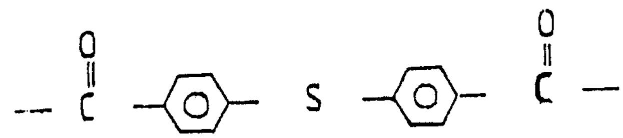

und 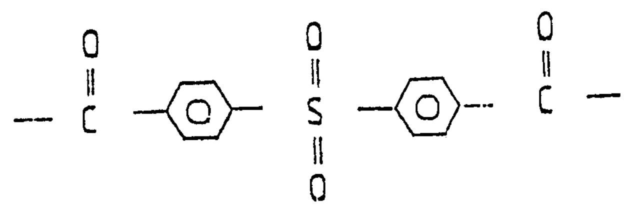.

Möglich sind auch Mischungen dieser Dicarbonsäuren oder Substituenten am aromatischen Ring, wie Alkylgruppen mit 1 bis 4 Kohlenstoffatomen, Alkoxygruppen mit 1 bis 4 Kohlenstoffatomen, Phenylsubstituenten, CN-Substituenten oder Halogene. Bevorzugt eingesetzt werden jedoch unsubstituierte Terephthalsäure und/oder 2,6-Naphthalindicarbonsäure. Schließlich kommen auch aromatische Dihydroxyverbindungen zum Einsatz. Das sind z.B. insbesondere Hydrochinon, Resorcin, 2,6-Dihydroxynaphthalin, 4,4′-Dihydroxydiphenyl, 4,4′-Dihydroxydiphenylether, 4,4′-Dihydroxydiphenylsulfid, 4,4′-Dihydroxydiphenylsulfon oder substituierte Verbindungen, wie Chlorhydrochinon, Methoxyhydrochinon, Phenylhydrochinon, Methylhydrochinon, Ethylhydrochinon und Cyanohydrochinon.

Die Schmelzen der Polyester sind anisotrop. Die Schmelztemperaturen liegen unter 200 °C. Die Polyester haben eine Lösungsviskosität im Bereich von 0,250 bis 0,930 dl/g, gemessen in Phenol/Tetrachlorethan.

Die erfindungsgemäßen Polyesteramide enthalten pro Struktureinheit (vgl. Formel I) eine oder mehrere monoethylenisch ungesättigte Komponenten, wie Fumarsäure oder substituierte Fumarsäure. Weitere Bestandteile der Polyesteramide sind gesättigte aliphatische oder oxyaliphatische Diole, wie Ethylenglycol, Propylenglycol, 1,4-Butandiol, 1,3-Butandiol, 1,5-Pentandiol, 1,6-Hexandiol, 1,7-Heptandiol, 1,8-Octandiol, 1,9-Nonandiol, 1,10-Decandiol, 1,11-Undecandiol, 1,12-Dodecandiol, Diethylenglycol, Triethylenglycol, Dipropylenglycol, Tripropylenglycol sowie ein- oder mehrkernige aromatische Aminocarbonsäuren, wie p-Aminobenzoesäure, 6-Aminonaphthalin-2-carbonsäure, m-Aminobenzoesäure sowie deren ringsubstituierte Derivate. Die Substituenten können Alkylgruppen mit 1 bis 4 Kohlenstoffatomen, Alkoxygruppen mit 1 bis 4 Kohlenstoffatomen, Phenylgruppen, Halogenatome und/oder Cyanogruppen sein. Beispiele dafür sind 6-Amino-5-methoxy-2-naphthalincarbonsäure, 1-Amino-2-chlor-4-benzoesäure usw. Bevorzugte Aminocarbonsäuren sind p-Aminobenzoesäure und m-Aminobenzoesäure. Ein weiterer Bestandteil der Polyesteramide

sind ein- oder mehrkernige aromatische Dicarbonsäuren. Beispiele sind folgende Einheiten:

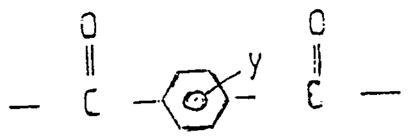 , 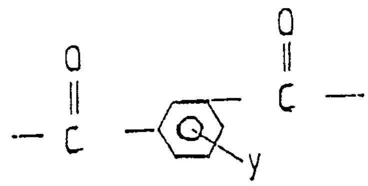 ,

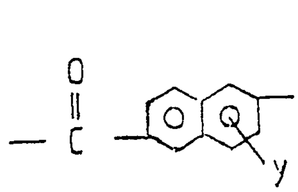 und 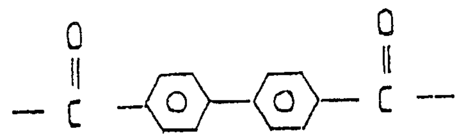

mit y wie oben definiert,

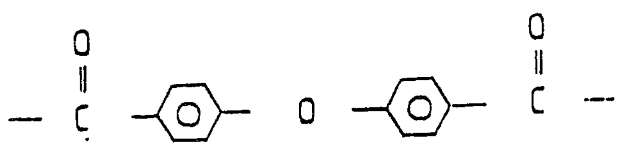 ,

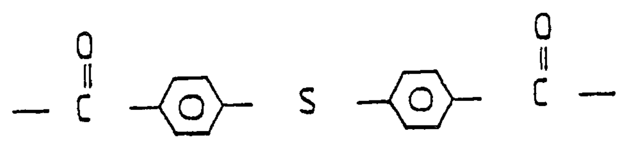 und

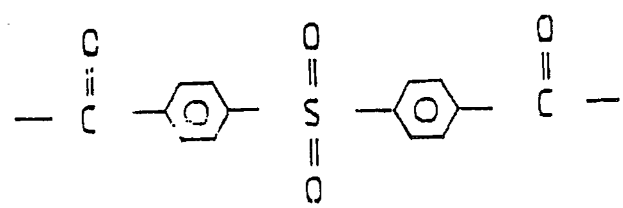 .

Möglich sind auch Mischungen dieser Dicarbonsäuren oder Substituenten am aromatischen Ring, wie Alkylgruppen mit 1 bis 4 Kohlenstoffatomen, Alkoxygruppen mit 1 bis 4 Kohlenstoffatomen, Phenylsubstituenten, CN-Substituenten oder Halogene. Bevorzugt eingesetzt werden jedoch unsubstituierte Terephthalsäure und/oder 2,6-Naphthalindicarbonsäure. Schließlich kommen auch aromatische Diaminoverbindungen zum Einsatz. Das sind z. B. p-Phenylendiamin, m-Phenylendiamin oder Verbindungen der Formel

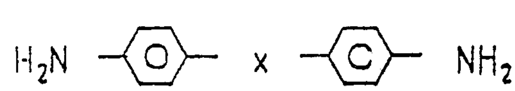

mit x = -; O; CO; $CH_2$, S oder $SO_2$

oder substituiertes p-Phenylendiamin mit Chlor-, Methyl-, Ethyl, Methoxy-, Ethoxy-, Phenyl- oder Cyanosubstituenten.

Die Schmelzen der Polyesteramide sind anisotrop, die Schmelztemperaturen liegen unter 250 °C. Die Polyesteramide haben eine Lösungsviskosität im Bereich von 0,250 bis 0,930 dl/g, gemessen in Phenol/Tetrachlorethan.

Die erfindungsgemäßen Polymeren, insbesondere die Polyester und Polyesteramide, sind schmelzverarbeitbar, ohne daß im Verarbeitungsbereich thermische Eigenvernetzung auftritt. Sie sind löslich in gebräuchlichen Lösungsmitteln, wie z.B. Chloroform, Dichlorethan, Tetrachlorethan, o-Dichlorbenzol, Dimethylformamid, Cresol und N-Methylpyrrolidon.

Die Vernetzung erfolgt in an sich bekannter Weise durch Erhitzen und/oder Bestrahlen mit UV-, Elektronen- oder Gammastrahlung in Gegenwart von Katalysatoren oder Sensibilisatoren. Als Katalysatoren sind Peroxide, wie z.B. Benzoylperoxid, AIBN oder Di-t-Butylperoxid anwendbar. Auch die Zugabe von radikalisch polymerisierbaren Monomeren, die zur Vernetzung konventioneller ungesättigter Polyester eingesetzt werden, ist möglich. Das sind z.B. Styrol, α-Methylstyrol, p-Divinylbenzol, Vinyltoluol, 2-Chlorstyrol, 2,5-Dichlorstyrol, N-Vinylpyrrolidon, 2-Vinylpyridin, N-Vinylcarbazol, Vinylacetat, Acrylsäure, Acrylate, Methacrylsäure, Methacrylate, Butylacrylate, Fumarsäuremonoester, Fumarsäurediester, Maleinsäurediester, Diallylphthalat, Diallylterephthalat, Dimethylacrylamid, Acrylnitril, Diallylfumarat, Triallylcyanurat, Dimethallylterephthalat u. dgl. Die Vernetzung ist zu jeder beliebigen Zeit sowohl unmittelbar nach der Herstellung der Verbindungen, insbesondere der Polyester oder Polyesteramide, als auch nach einer Zwischenlagerung bis zu mehreren Jahren möglich. Zur Vernetzung wird das Polymer in Mengen von 0,1 bis 50 %, bezogen auf seine Masse, in einem Lösungsmittel gelöst, welches das Polymer vollständig auflöst. Bei Folienerzeugung wird ein Lösungsmittel gewählt, das gut zur Folienbildung befähigt ist. Peroxid wird in den zur Vernetzung ungesättigter Polyester üblichen Mengen und/oder das radikalisch polymerisierbare Monomer in einer Menge von 0,05 bis 20 mol pro Mol Doppelbindungen im Polymer zugegeben; danach wird z.B. eine Folie gegossen. Bevorzugt werden Monomermengen von 0,1 bis 10 mol pro Mol Doppelbindungen im Polymer zugegeben. Die Polymeren, insbesondere die Polyester und Polyesteramide können auch direkt im polymerisierbaren Monomer im angegebenen Verhältnis gelöst und zu einer Folie gegossen werden, die dann vernetzt wird. Die Vernetzung ohne Zusatz von Monomeren kann durch Tempern, z.B. von Spritzgußkörpern in der Form bei Temperaturen von 210 bis 250 °C über 5 bis 240 min, erfolgen.

Überraschenderweisee wurde festgestellt, daß die vernetzten Folien und Formkörper anisotrop sind und diese Anisotropie bis weit über den Isotroppunkt des unvernetzten flüssigkristallinen Polymers erhalten bleibt.

Nachstehend wird die Erfindung an mehreren Ausführungsbeispielen näher erläutert.

**Beispiel 1**

0,125 mol Fumarsäure und 2 mol Hexandiol werden azeotrop in 300 ml Toluol als Schleppmittel zu Dihydroxydihexylfumarat verestert. Der durch mehrmaliges Umfällen gereinigte Ester hat einen Schmelzpunkt von 62 °C.

| | | |
|---|---|---|
| IR (KBr): | C = C | : 3080 $cm^{-1}$, 990 $cm^{-1}$ |
| | C = O | : 1720 $cm^{-1}$ |
| | OH | : 3440 $cm^{-1}$. |

Für die Polykondensation werden in einem Dreihalskolben mit Stickstoffeinleitung, Rückflußkühler und Rührer 10 mmol Dihydroxydihexylfumarat, 10 mmol Terephthaloyl-bis(4-aminobenzoylchlorid) sowie 10 ml Diphenylether vorgelegt. Die Mischung wird ca. 15 min mit Stickstoff gespült und anschließend 1 Stunde bei 190 °C unter Stickstoff polykondensiert. Das Polymer wird heiß in Toluol ausgefällt und abgesaugt. Nach der Extraktion mit Aceton im Soxhlet-Apparat wird das Polymer im Vakuum bei 60 bis 80 °C 12 Stunden getrocknet. Das Polymer besitzt einen Schmelzpunkt von $T_m$ = 187 °C, $T_{ni}$ = 203 °C, $\eta_{inn}$ = 0,45 dl/g in Phenol/Tetrachlorethan bei 30 °C.

Zu einer 1-%igen Polymerlösung in Chloroform werden 2 mol α-Methylstyrol pro Mol Doppelbindungen zugegeben, worauf eine Folie gegossen wird. Diese Folie läßt sich durch 30 min Tempern bei 160 °C ansteigend auf 200 °C vernetzen.

Das vernetzte Polymer ist unschmelzbar und anisotrop bis 260 °C.

**Beispiel 2**

Entsprechend Beispiel 1 wird Dihydroxydioctylfumarat ($T_m$ = 59 °C) mit Terephthaloyl-bis(4-aminobenzoylchlorid) äquimolar polykondensiert. Das Polymer schmilzt bei 175 °C und wird bei 201 °C isotrop. Lösungsviskosität in Phenol/Tetrachlorethan bei 30 C $\eta_{inn}$ = 0,87 dl/g.

Nach der analog Beispiel 1 durchgeführten Vernetzung ist das Polymer unschmelzbar und anisotrop bis 245 °C.

**Beispiel 3**

Entsprechend Beispiel 1 wird Dihydroxydihexylfumarat mit N,N′-p-Phenylen-bis-(terephthalamidocarbonsäurechlorid) äquimolar polykondensiert. Das Polymer schmilzt bei 198 °C und wird bei 228 °C isotrop. Das Polymer wird in reiner Form aufgeschmolzen und 3 Stunden bei 210 °C vernetzt.

Das vernetzte Polyesteramid ist unschmelzbar, unlöslich in gebräuchlichen Lösungsmitteln und anisotrop bis zum Zersetzungsbeginn bei 300 °C.

**Beispiel 4**

0,125 mol Fumarsäure und 2 mol Hexandiol werden azeotrop in 300 ml Toluol als Schleppmittel zu Dihydroxydihexylfumarat verestert. Das Polymer hat einen Schmelzpunkt von 140 °C, die Schmelze ist anisotrop. Die Übergangstemperatur zur isotropen Schmelze liegt bei 180 °C. Der Polyester hat eine Lösungsviskosität $\eta_{inn}$ von 0,35 dl/g in Phenol/Tetrachlorethan, gemessen bei 30 °C.

Zur Bildung einer vernetzbaren Folie werden 200 mg Polymer in 13 ml Chloroform gelöst und mit 50 mg Styrol versetzt. Die Lösung wird auf eine Glasplatte gegossen und das Lösungsmittel verdampft. Es läßt sich eine dünne, schwach getrübte Folie abziehen, die durch 15 min Tempern bei 140 bis 160 °C vernetzt wird.

Die vernetzte Folie ist anisotrop bis 250 °C, unschmelzbar und unlöslich in allen gebräuchlichen organischen Lösungsmitteln, wie $CHCl_3$, Dichlorethan, Aceton, Benzol, Toluol, Dichlorbenzol u.ä.

**Beispiel 5**

Aus 0,125 mol Fumarsäure und 2 mol Octandiol wird durch Azeotropveresterung Dihydroxydioctylfumarat hergestellt, $T_m$ = 59 °C. Das entsprechende Polymer wird wie in Beispiel 4 hergestellt. $T_m$ = 142 °C, $T_{ni}$ = 160 °C, $\eta_{inn}$ = 0,910 dl/g. Die entsprechend Beispiel 1 hergestellte Folie wird nach dem Tempern unschmelzbar und bleibt anisotrop bis 220 °C.

**Beispiel 6**

Dihydroxydihexylfumarat wird mit o,o′-1,4-Phenylen-bis(terephthaloylcarbonsäurechlorid) einer Polykondensation wie in Beispiel 4 unterzogen.

Der Polyester hat einen Schmelzpunkt von $T_m$ = 170 °C und wird isotrop bei $T_{ni}$ = 185 °C; $\eta_{inn}$ = 0,850 dl/g.

Die entsprechend Beispiel 1 hergestellte Folie wird nach dem Tempern unschmelzbar und bleibt anisotrop bis 230 °C.

**Beispiel 7**

Dihydroxydihexylfumarat wird mit 1,4-Dioxycarbonyl-2-chlorphenylen-bis(4-benzoylchlorid) einer Polykondensation wie in Beispiel 4 unterzogen.

Der Polyester hat einen Schmelzpunkt von $T_m$ = 83 °C und wird isotrop bei $T_{ni}$ = 160 °C; $\eta_{inn}$ = 0,63 dl/g.

5g Polyester werden aufgeschmolzen; die Schmelze wird bei 100 °C mit 1 g Styrol vermischt. Der Polyester wird in eine Form gegossen und bei 140 °C 45 min gehärtet. Der vernetzte Polyester ist unschmelzbar und anisotrop bis 200 °C.

**Beispiel 8**

Dihydroxydibutylfumarat ($T_m$ = 74 °C) wird mit 2,6-Naphthaloyl-bis(p-oxybenzoylchlorid) nach Beispiel 4 polykondensiert.

Der Polyester hat einen Schmelzpunkt von $T_m$ = 174 °C und wird isotrop bei $T_{ni}$ = 220 °C; $\eta_{inn}$ = 0,720 dl/g.

Der Polyester wird mit α-Methylstyrol nach Beispiel 4 zu einer Folie verarbeitet und bei 140 bis 180 °C innerhalb von 2 Stunden vernetzt. Die vernetzte Folie ist anisotrop bis 250 °C.

## Ansprüche

1. Reguläre, lineare, thermotrope, vernetzbare Polymere mit mesogenen Einheiten und flexiblen Spacern in der Polymerhauptkette,
**gekennzeichnet durch** die allgemeine Strukturformel I,

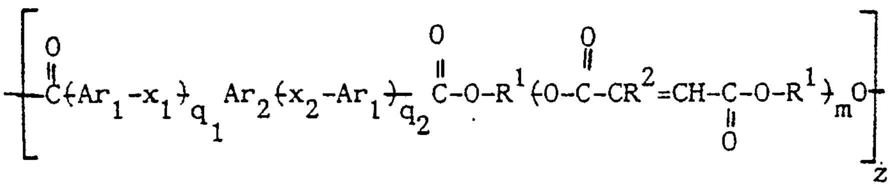 (I),

worin bedeuten:

- $Ar_1$ 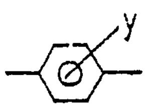, 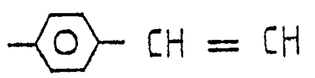 oder 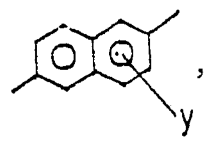,

und

- $Ar_2$ 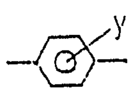, 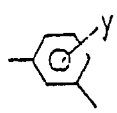, 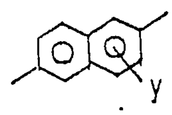,

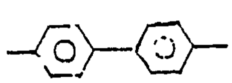, 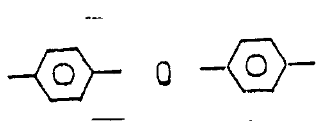, 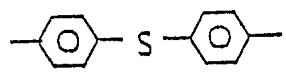,

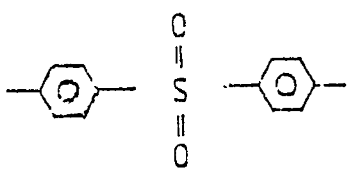 oder 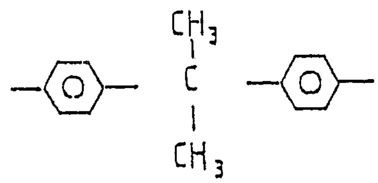,

wobei y H, F, Cl, CN, Phenyl oder $C_nH_{2n+1}$ oder $OC_nH_{2n+1}$
mit n = 1, 2, 3 oder 4 bedeutet,
- $x_1$ OCO und $x_2$ COO
oder
$x_1$ COO und $x_2$ OCO
oder
$x_1$ NHCO und $x_2$ CONH
oder
$x_1$ CONH und $x_2$ NHCO,
- $R^1$ eine gesättigte lineare oder verzweigte aliphatische Gruppe mit 2 bis 12 C-Atomen oder eine oxyaliphatische Gruppe mit 4 bis 10 C-Atomen,
- $R^2$ H oder $CH_3$,

- $q_1$ und $q_2$ zugleich oder unabhängig 1, 2, 3, 4 oder 5,
- m 1, 2, 3 oder 4

und

- z den Polykondensationsgrad, insbesondere eine Zahl von 5 bis 15.

2. Polymere der Strukturformel I nach Anspruch 1, in der $R^1$ bedeutet:
$(CH_2\text{-}CHR^3\text{-}O)_s$ mit $R^3$ = H oder $CH_3$ und $s$ = 2, 3 oder 4,
$(CH_2\text{-}CHR^3)_{s'}$ mit $R^3$ = H oder $CH_3$ und $s'$ = 0, 1, 2, 3 oder 4
oder
$(CH_2)_{s''}$ mit $s''$ = eine ganze Zahl von 1 bis 8.

3. Polyesteramide der Strukturformel I nach Anspruch 1 oder 2, worin bedeuten:

- $Ar_1$ 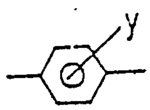 oder 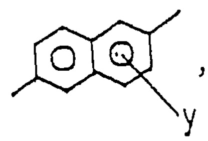 ,

- $x_1$ NHCO und $x_2$ CONH
oder
$x_1$ CONH und $x_2$ NHCO,
- $q_1$ und $q_2$ zugleich oder unabhängig 1 oder 2

und

- $Ar_2$, $R^1$, $R^2$, m und z dasselbe wie in Anspruch 1.

4. Polymere der Strukturformel I nach einem der Ansprüche 1 bis 3, worin bedeuten:

- $Ar_1$ 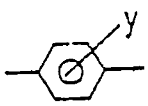 oder 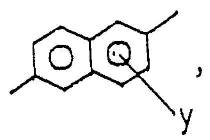 ,

und/oder

- $Ar_2$

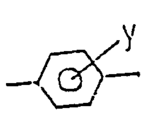 , 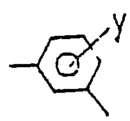 , 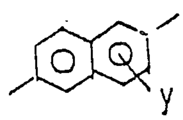 oder 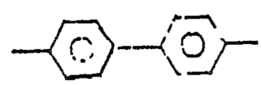

mit y = H, Cl, $CH_3$ oder $OCH_3$

und/oder

- $q_1$, $q_2$ 1

und/oder

- m 1 oder 2

und/oder

- $R^1$ $-(CH_2\text{-}CH_2)_{s''}-$ mit $s'$ = 0, 1, 2, 3 oder 4 oder $-(CH_2)_{s'}-$ mit $s''$ = eine ganze Zahl von 1 bis 8 und insbesondere 4 bis 8

und/oder

- $R^2$ H.

5. Polymere nach einem der Ansprüche 1 bis 4, dadurch gekennzeichnet, daß sie aus Struktureinheiten der Formel I bestehen.

6. Polymere nach einem der Ansprüche 1 bis 4, dadurch gekennzeichnet, daß sie Struktureinheiten der Formel I enthalten.

7. Polymermaterialien, dadurch gekennzeichnet, daß sie aus durch Energiezufuhr vernetzten Polymeren nach einem der Ansprüche 1 bis 6 bestehen oder diese enthalten.

8. Polymermaterialien, dadurch gekennzeichnet, daß sie aus mit einem Vernetzungsmittel vernetzten Polymeren nach einem der Ansprüche 1 bis 7 bestehen oder diese enthalten.

9. Verfahren zur Herstellung von regulären, linearen, thermotropen, vernetzbaren Verbindungen, vorzugsweise Polyestern oder Polyesteramiden, mit mesogenen Einheiten und flexiblen Spacern in der Polymerhauptkette, insbesondere nach einem der Ansprüche 1 bis 8, gekennzeichnet durch Polykondensation eines komplexen Dicarbonsäuredichlorids der allgemeinen Formel II

$$Cl-\overset{O}{\overset{\|}{C}}\{Ar_1-x_1\}_{q1}Ar_2\{x_2-Ar_1\}_{q2}\overset{O}{\overset{\|}{C}}-Cl \quad (II),$$

worin bedeuten:

- Ar1 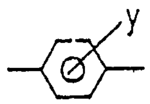, 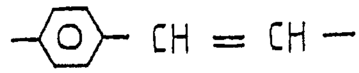 oder 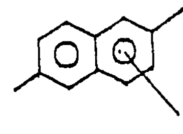,

- Ar2 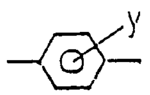, 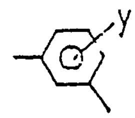, 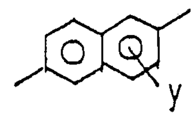,

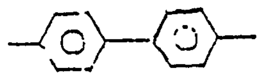, 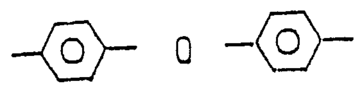, 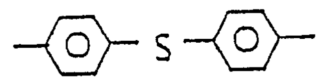,

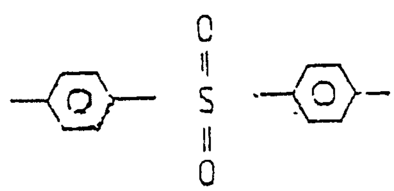 oder 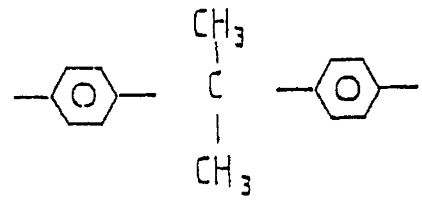,

wobei y H, F, Cl, CN, Phenyl oder $C_nH_{2n+1}$ oder $OC_nH_{2n+1}$ mit n = 1, 2, 3 oder 4 bedeutet,
- $x_1$ OCO und $x_2$ COO
oder
$x_1$ COO und $x_2$ OCO
oder
$x_1$ NHCO und $x_2$ CONH
oder
$x_1$ CONH und $x_2$ NHCO,
und
- $q_1$ und $q_2$ zugleich oder unabhängig 1, 2, 3, 4 oder 5,

mit einem oligomeren ungesättigten Diol der allgemeinen Formel III,

$$HO-R^1\{O-\overset{O}{\overset{\|}{C}}-CR^2=CH-\underset{O}{\underset{\|}{C}}-O-R^1\}_mOH \quad (III),$$

worin bedeuten:
- $R^1$ eine gesättigte lineare oder verzweigte aliphatische Gruppe mit 2 bis 12 C-Atomen oder eine oxyaliphatische Gruppe mit 4 bis 10 C-Atomen
- $R^2$ H oder $CH_3$
und
- m 1, 2, 3 oder 4.

10. Verfahren nach Anspruch 9, dadurch gekennzeichnet, daß das Dicarbonsäuredichlorid der Formel II mit dem ungesättigten Diol der Formel III in einem Molverhältnis von 1:5 bis 5:1 polykondensiert wird.

11. Verfahren nach Anspruch 9 oder 10, dadurch gekennzeichnet, daß das Dicarbonsäuredichlorid der Formel II mit dem ungesättigten Diol der Formel III bei einer Temperatur von 140 bis 240 °C 0,5 bis 4 h unter Inertgas polykondensiert wird.

12. Verfahren nach einem der Ansprüche 9 bis 11, dadurch gekennzeichnet, daß das Polykondensationsprodukt der Strukturformel I thermisch und/oder unter Einsatz eines Vernetzungsmittels vernetzt wird.

13. Verfahren nach Anspruch 12, dadurch gekennzeichnet, daß die Polykondensation bzw. Vernetzung unter Einsatz des Vernetzungsmittels in einer Menge von 0,05 bis 20 mol und insbesondere 0,1 bis 10 mol pro Mol Doppelbindungen im Polymer bei 140 bis 180 °C vorgenommen wird.

14. Verfahren nach einem der Ansprüche 9 bis 13, gekennzeichnet durch Verwendung eines ungesättigten Diols der Formel III, in der $R^1$ bedeutet:
$(CH_2\text{-}CHR^3\text{-}O)_s$ mit $R^3$ = H oder $CH_3$ und $s$ = 2, 3 oder 4,
$(CH_2\text{-}CHR^3)_s'$ mit $R^3$ = H oder $CH_3$ und $s'$ = 0, 1, 2, 3 oder 4
oder
$(CH_2)_s''$ mit $s''$ = eine ganze Zahl von 1 bis 8.

15. Verfahren nach einem der Ansprüche 1 bis 14, gekennzeichnet durch Verwendung eines Dicarbonsäuredichlorids der Formel II, in der bedeuten:

- $Ar_1$ 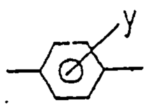 oder 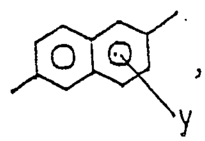 ,

-$x_1$ NHCO und $x_2$ CONH
oder
$x_1$ CONH und $x_2$ NHCO,
und
- $q_1$ und $q_2$ zugleich oder unabhängig 1 oder 2
und
- $Ar_2$ dasselbe wie in Anspruch 9.

16. Verfahren nach einem der Ansprüche 9 bis 15, dadurch gekennzeichnet, daß das Dicarbonsäuredichlorid der Formel II mit dem ungesättigten Diol der Formel III in einem Molverhältnis von 1:2 bis 2:1 und insbesondere im Molverhältnis 1:1 polykondensiert werden.

17. Verfahren nach einem der Ansprüche 9 bis 16, gekennzeichnet durch Verwendung von Terephthaloyl-bis(4-oxybenzoylchlorid), o,o′-1,4-Phenylen-bis(terephthaloylcarbonsäurechlorid, 2,6-Naphthaloyl-bis(4-oxybenzoylchlorid), 1,4-Dioxycarbonyl-2-chlorphenylen-bis(4- benzoylchlorid), Terephthaloyl-bis(4-aminobenzoylchlorid), 2,6-Naphthoyl-bis(4-aminobenzoylchlorid) und/oder N,N′-1,4-Phenylen-bis(terephthalamidocarbonsäurechlorid) als Dicarbonsäuredichloride der Formel II.

18. Verfahren nach einem der Ansprüche 9 bis 17, gekennzeichnet durch Verwendung eines Dihydroxydialkylfumarats mit 4 bis 8 C-Atomen in der Alkylkette als ungesättigtes Diol der Formel III.

19. Verfahren nach einem der Ansprüche 9 bis 18, gekennzeichnet durch Polykondensation des Dicarbonsäuredichlorids der Formel II mit dem ungesättigten Diol der Formel III in äquimolarem Verhältnis bei 170 bis 220 °C in einem inerten Lösungsmittel unter Inertgas während 1 bis 2 h.

20. Verfahren nach einem der Ansprüche 9 bis 19, gekennzeichnet durch Einsatz von Styrol als Vernetzungsmittel, insbesondere in einer Menge von 1 bis 5 mol pro Mol Doppelbindungen im Polymer.

21. Verfahren nach einem der Ansprüche 9 bis 20, gekennzeichnet durch
Verwendung eines Dicarbonsäuredichlorids der Formel II, in der bedeuten:

- $Ar_1$ 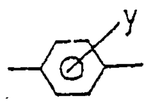 oder 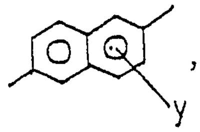 ,

und/oder

- $Ar_2$

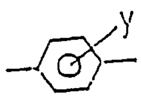 , 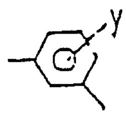 , 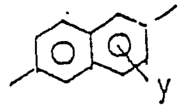 oder 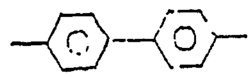

mit y = H, Cl, $CH_3$ oder $OCH_3$
und/oder
- $q_1$, $q_2$ 1
und/oder Verwendung eines ungesättigten Diols der Formel III, in der $R^1$ $(CH_2)_{s''}$ mit $s''$ = eine ganze Zahl von 1 bis 8 und/oder $(CH_2\text{-}CR^3\text{-}O)_s$ mit $R^3$ = H oder $CH_3$ und s = 2, 3 oder 4.

22. Verwendung der Polymeren nach einem der Ansprüche 1 bis 8 als Spezialwerkstoffe hoher Festigkeit und Wärmebeständigkeit, insbesondere für Formkörper, Folien und Fäden.